# EUROPÄISCHE PATENTANMELDUNG

(11) **EP 2 402 141 A1**
(43) Veröffentlichungstag der Anmeldung: **04.01.2012**
(21) Anmeldenummer: 10167087.5
(22) Anmeldetag: 23.06.2010
(51) Int. Cl.: B29C 45/40

(54) **Flachauswerfer zum Auswerfen eines Spritzgussteils aus einer Spritzgussform**

(71) Anmelder: Gigaset Communications GmbH, 81379 München (DE)
(72) Erfinder: Fahrland, Bernhard, 46399 Bocholt (DE)
(74) Vertreter: Schulz, Dirk

(57) **Zusammenfassung**

Gegenstand der Erfindung ist Spritzgussform zur Herstellung eines Spritzgussteils, mit einem Flachauswerfer zum Auswerfen des Spritzgussteils aus der Spritzgussform, wobei der Flachauswerfer einen Auswerferstift (1) mit einem Schaft (2) und ein daran anschließendes Auswerferblatt (3) aufweist. Erfindungsgemäß ist vorgesehen, dass der Durchmesser des Schafts (2) des Auswerferstifts (1) kleiner ist als die Breite des Auswerferblatts (3). Damit wird ein Flachauswerfer bereitgestellt, bei dem mittels einer Führungseinrichtung (4) ein Ausknicken des Auswerferblattes (1) kostengünstig und auf einfache Weise verhindert wird.

## Beschreibung

Die Erfindung betrifft einen Flachauswerfer zum Auswerfen eines Spritzgussteils aus einer Spritzgussform, wobei der Flachauswerfer einen Auswerferstift mit einem Schaft und ein daran anschließendes Auswerferblatt aufweist.

Flachauswerfer werden im Formenbau verwendet, der der Herstellung von Werkzeugen (Formen) dient. Man unterscheidet verlorene Formen und Dauerformen. Dauerformen sind Formen für die Massenproduktion, die für eine Vielzahl von Produktionsvorgängen verwendet werden, weshalb die einzelnen Bestandteile dieser Werkezuge entsprechend widerstandsfähig sein müssen.

Die Werkzeuge werden aus einzelnen Formteilen zum Teil unter Verwendung von Normteilen zusammengebaut. Ein fertig montiertes Werkzeug besteht häufig aus einer Vielzahl von Formteilen, beispielsweise enthält es eine Matrize, einen Kern, ein Angusssystem und eine Ausstoßereinheit (Auswerfereinheit). Die Matrize ist das Negativ der Außenform des herzustellenden Werkstücks. Mit Hilfe des Kerns wird die Innenform des Teils geformt, wodurch in dem hergestellten Werkstück ein Hohlraum entsteht. In der Form werden die Matrize und der Kern in einer bestimmten Anordnung zueinander positioniert.

Das Angusssystem dient dazu, die geschmolzene Formmasse aufzunehmen und in den Hohlraum des Werkzeugs zu leiten. Nachdem der in die Form eingebrachte Werkstoff ausgehärtet ist, wird das gehärtete Material aus der Form herausgelöst. Diesen Vorgang bezeichnet man als Entformen.

Das Entformen erfolgt häufig mit Hilfe von Auswerfern bzw. Austoßern oder Abstreifern. Auswerfer schieben die Formteile aus dem geöffneten Werkzeug. Beim Entformen werden teilweise komplizierte Mechanismen angewendet, um ein hergestelltes Teil aus dem Werkzeug herauszulösen. Neben den ganz gewöhnlichen Auswerfern oder Abstreifern werden Schieber oder Schrägausstoßer verwendet. Eine besondere Schwierigkeit ist das Entformen von dreidimensionalen Formen, die wegen ihrer Gestaltung kein einfaches Herauslösen in eine Richtung ermöglichen. Hier werden Gewinde- oder Zusammenfallkerne verwendet. In einigen Fällen kann der Kern einfach im Teil verbleiben. Die Entformungsvarianten können auch miteinander kombiniert werden.

Auswerfersysteme bestehen in der Regel aus einem Auswerferstift, einer Führungseinrichtung und einer Auswerferplatte. Der Auswerferstift besteht im Allgemeinen aus einem Schaft und einem Kopf, wobei sowohl der Schaft als auch der Kopf in der Regel zylindrisch geformt sind.

Aus der Praxis ist bekannt, dass Flachauswerfer im Allgemeinen aus einem Auswerferstift mit zylindrischem Schaft und einem Auswerferblatt von flachem, rechteckigem Querschnitt bestehen. Bei den aus der Praxis bekannten Flachauswerfen wird das Auswerferblatt nur im vorderen Bereich geführt. Dadurch ist das Auswerferblatt zumindest auf der Länge des Auswerferhubs bis zum zylindrischen Schaft des Auswerferstifts ohne Führung. Das Auswerferblatt kann deshalb leicht bei hoher Belastung ausknicken. Dadurch ist es nicht ausreichend widerstandfähig für eine Massenproduktion.

Um das Ausknicken zu vermeiden, werden verschiedene Materialen und Beschichtungen bei Flachauswerfern verwendet. Auch wurde versucht, das Auswerferblatt mit zusätzlichen Teilen auf der ganzen Länge zu führen (Firma HASCO Hasenclever GmbH + Co KG, Produktbeschreibung Z 461/Z 462; Gießerei Lexikon (2008) Stephan Hasse, Verlag Schiele & Schön, S. 390). Bei diesem Flachauswerfer der Firma HASCO ist das Auswerferblatt mit einer Buchse fest verbunden, die in die Aufspannplatte bzw. Werkzeug-Auswerferplatte eingebaut wird. Zusätzlich müssen bei diesem Flachauswerfer Führungssegmente im Werkzeug bzw. der Auf spannplatte montiert werden, um das Auswerferblatt zu stabilisieren. Hierbei muss darauf geachtet werden, dass die Führungssegmente gegen Verdrehung gesichert werden (Produktbeschreibung Z 461/Z 462, Absatz 4 und 5).

Meistens liegen Formkerne und Flachauswerfer bzw. Auswerfersystem auf der beweglichen Seite des Werkzeugs. Häufig sind Bauteilgestaltung und Werkzeugkonstruktion so ausgelegt, dass beim Öffnen des Werkzeuges das Formteil auf der Auswerferseite des Werkzeuges haftet. Sind Hinterschneidungen vorhanden, so werden diese durch quer zur Trennebene bewegliche Schieber vor dem Auswerfen freigestellt. Die Schieber können mechanisch mit Führungsbolzen oder mit Hydraulikzylindern (Kernzüge) betätigt werden.

Im Anschluss an den jeweiligen Fertigungsprozess beziehungsweise Teilprozess drücken ein oder mehrere über das Werkzeug verteilte Flachauswerfer gegen das Werkstück und drücken es um ein definiertes Maß aus der Werkzeugform heraus bzw. heben es ab. Neben Flachauswerfern sind an der Entformung gegebenenfalls auch andere Auswerfer, Abstreifer, Schieber, Schrägausstoßer, Gewinde- und/oder Zusammenfallkerne beteiligt. Das Formteil wird mit dem Hub des Auswerfers aus dem Werkzeug entfernt. Dadurch wird ein Aufnehmen des Werkstücks z.B. durch einen Roboter möglich und somit ein automatisierter Fertigungsprozess gewährleistet.

Flachauswerfer sind besonders zum Abheben von Werkstücken im Bereich von schmalen Stegen oder Rippen geeignet. Mit den erfindungsgemäßen Flachauswerfen können sehr schmale und tiefe Stege oder Rippen auf engstem Raum ohne Ausknicken des Auswerferblatts realisiert werden.

Der Flachauswerfer kann mechanisch oder hydraulisch betrieben werden. Oft wird der Auswerfer mit einem Hydraulikzylinder angetrieben, der im Werkzeug integrierten ist, oder die Entformung kann durch Pressluft oder eine Saugvorrichtung unterstützt werden. Häufig werden die Bauteile auch mit z.B. Robotern während des Ausstoßens gegriffen und definiert abgelegt bzw. weiterverarbeitet.

Flachauswerfer schieben die Formteile aus dem geöffneten Werkzeug. Sie werden häufig dort angebracht, wo größere Entformungskräfte zu erwarten sind, zum Beispiel dort, wo die Entformungsschräge gering oder die Oberflächenrauhigkeit groß ist. Ist die Formteilwanddicke gering, können die Flächenauswerfer- bzw. Querschnittsflächen vergrößert werden, um eine Beschädigung der Teile durch zu große lokale Kräfte zu vermeiden.

Das Vorschieben der Flachauswerfer kann über den Öffnungshub mechanisch zwangsgesteuert erfolgen, das Zurückfahren beim Schließen des Werkzeugs ebenso. Am Werkzeug sind dazu geeignete mechanische Anschläge, Schleppstangen, Rückdrückstifte u.a. anzubringen. Spritzgießmaschinen können zum Beispiel aber auch auf der beweglichen Werkzeugaufspannplatte mit Auswerferantrieben versehen sein, die ein von der Werkzeugbewegung unabhängiges Betätigen des Flachauswerfers erlauben. Auswerferbewegungen und -kräfte können damit beliebig programmiert und auch zur sicheren Entfernung der Teile repetiert werden.

Beim Schließen der Werkzeuge müssen die vorgeschobenen Flachauswerfer rechtzeitig in die Spritzstellung bei geschlossenem Werkzeug zurückgezogen werden, da sonst die Auswerfer oder die gegenüberliegende Werkzeughälfte beschädigt werden.

Die Flachauswerfer können in umformenden und urformenden Fertigungsverfahren eingesetzt werden. Zum Beispiel in der Blech- und Massivumformung, beim Stanzen, beim Spritzguss, Druckguss und der Sandkernherstellung. Eine besondere Ausführungsform betrifft die Verwendung der Flachauswerfer in der Spritzgusstechnik. Dort werden die Flachauswerfer zum Abheben der Spritzteile im Bereich von schmalen Stegen oder Rippen verwendet. In einer besonderen Ausführungsform werden die Flachauswerfer zur Herstellung von Urformen verwendet werden. Als Urformen bezeichnet man das Herstellen fester geometrischer Körper, wie Formteile (Rohre, Gehäuseteile, Becher usw.) aus formlosen Stoffen, wie Schmelzen oder Pulver. Diese Verfahren sind für Thermoplaste die wichtigste Art der Formgebung. Eine Nachbearbeitung kann in den meisten Fällen unterbleiben. Für Duroplaste sind nur Urformaber keine Umformverfahren einsetzbar.

Aufgabe der vorliegenden Erfindung ist es, einen Flachauswerfer bereitzustellen, bei dem ein Ausknicken des Auswerferblattes kostengünstig und auf einfache Weise verhindert werden kann.

Diese Aufgabe wird durch die Gegenstände der unabhängigen Ansprüche gelöst. Bevorzugte Ausgestaltungen sind in den Unteransprüchen beschrieben.

Gegenstand der Erfindung ist insofern ein Flachauswerfer zum Auswerfen eines Spritzgussteils aus einer Spritzgussform, wobei der Flachauswerfer einen Auswerferstift mit einem Schaft und ein daran anschließendes Auswerferblatt aufweist, dadurch gekennzeichnet, dass der Durchmesser des Schafts des Auswerferstifts kleiner ist als die Breite des Auswerferblatts.

Auf diese Weise ist eine genaue und sichere Führung des Flachauswerfers möglich, so dass sich der erfindungsgemäße Flachauswerfer im Vergleich zu den bisher im Stand der Technik beschriebenen Flachauswerfern unter Anderem durch eine höhere Stabilität auszeichnet. Insbesondere kann nämlich für den erfindungsgemäßen Flachauswerfer in der Spritzgussform, in der er verwendet wird, eine Führungseinrichtung vorgesehen werden, die mit dem Auswerferblatt zusammenwirkt und das Auswerferblatt vorzugsweise auf seiner ganzen Länge führt und nicht nur im vorderen Bereich des Auswerferblattes, wie aus dem Stand der Technik bekannt. Der erfindungsgemäße Flachauswerfer ist deshalb insbesondere für die Massenproduktion geeignet. Zeit- und kostenintensive Wartungs- und Reparaturarbeiten können daher weitgehend entfallen. Auch müssen keine zusätzlichen, das Auswerferblatt stabilisierenden Einrichtungen vorgesehen werden.

Grundsätzlich kann der Schaft verschiedene Geometrien aufweisen. Gemäß einer bevorzugten Weiterbildung der Erfindung ist jedoch vorgesehen, dass der Schaft eine zylindrische Form aufweist. Ferner kann auch das Auswerferblatt geometrisch auf verschiedene Weisen ausgestaltet sein. Vorzugsweise weist das Auswerferblatt jedoch einen rechteckigen Querschnitt auf. Der Schaft und/oder das Auswerferblatt sind vorzugsweise aus Stahl hergestellt. Der Flachauswerfer kann beispielsweise aus einem legiertem Kalt- oder Warmarbeitsstahl bestehen, vorzugsweise mit gehärteten Aktivflächen.

Vorzugsweise liegt der Durchmesser des Schafts des Auswerferstifts im Bereich von 4,2 mm bis 8 mm, besonders bevorzugt im Bereich von 4,2 mm bis 6mm. Vorzugsweise liegt die Breite des Auswerferblatts im Bereich von 5,5 mm bis 11,5 mm, besonders bevorzugt im Bereich von 5,5 mm bis 7,5mm. Außerdem gilt gemäß einer bevorzugten Weiterbildung der Erfindung, dass das Verhältnis des Durchmessers des Schafts des Auswerferstifts zur Breite des Auswerferblatts im Bereich von 0,6 bis 0,9 liegt, insbesondere im Bereich von 0,7 bis 0,8 mm liegt.

Gegenstand der Erfindung ist ferner eine Spritzgussform zur Herstellung eines Spritzgussteils, mit einem Flachauswerfer wie zuvor beschrieben, wobei eine Führungseinrichtung vorgesehen ist, in der der Flachauswerfer längsbeweglich geführt ist, wobei die Führungseinrichtung eine dem Durchmesser des Schafts entsprechende Bohrung aufweist und in der Bohrung eine zur Führung des Auswerferblatts dienende und in Längsrichtung der Bohrung verlaufende Nut vorgesehen ist.

Die im Stand der Technik beschriebenen Auswerferstifte werden aufgrund ihrer Abmessungen zusammen typischerweise mit Führungseinrichtungen verwendet, die eine relativ große Freibohrung aufweisen. Dabei ist das Auswerferblatt schmaler als der Schaft. Das führt bei den im Stand der Technik beschriebenen Flachauswerfern dazu, dass das Auswerferblatt nicht bündig mit der Führungseinrichtung abschließt. Im Gegensatz dazu kann bei der Erfindung eine Führungseinrichtung verwendet werden, die genau zu den Abmessungen des Auswerferblattes passt, vorzugsweise nämlich eine Breite aufweist. die der Breite des Auswerferblatts entspricht. Dadurch wird das Auswerferblatt in der Führungseinrichtung sicher geführt und stabilisiert. Es ist ein besonderer Vorteil der Erfindung, dass zur Stabilisierung des Auswerferblatts keine zusätzlichen Formteile, wie beispielsweise Führungselemente, verwendet werden müssen.

Bei der vorliegenden Spritzgussform ist vorzugsweise vorgesehen, dass zur Führung des Auswerferblatts in der Bohrung zwei einander gegenüberliegende Nuten angeordnet sind.

Eine bevorzugte Verwendung einer derartigen Spritzgussform liegt in der Herstellung eines Gehäuses für ein mobiles Telefon.

Im Übrigen gilt, dass ie Führung für den Flachauswerfer kann auch aus einem Teil bestehen kann.

Im Folgenden wird die Erfindung anhand eines bevorzugten Ausführungsbeispiels unter Bezugnahme auf die Zeichnung weiter im Detail beschrieben. Es zeigen
- Fig. 1 a und b: einen Flachauswerfer gemäß einem bevorzugten Ausführungsbeispiel der Erfindung in einer Seitenansicht bzw. in einer Draufsicht,
- Fig. 2: eine Draufsicht auf den unteren Teil einer Führungseinrichtung eines Flachauswerfers gemäß einem bevorzugten Ausführungsbeispiel der Erfindung und
- Fig. 3: eine Rückansicht einer Führungseinrichtung für einen Flachauswerfer gemäß einem bevorzugten Ausführungsbeispiel der Erfindung.

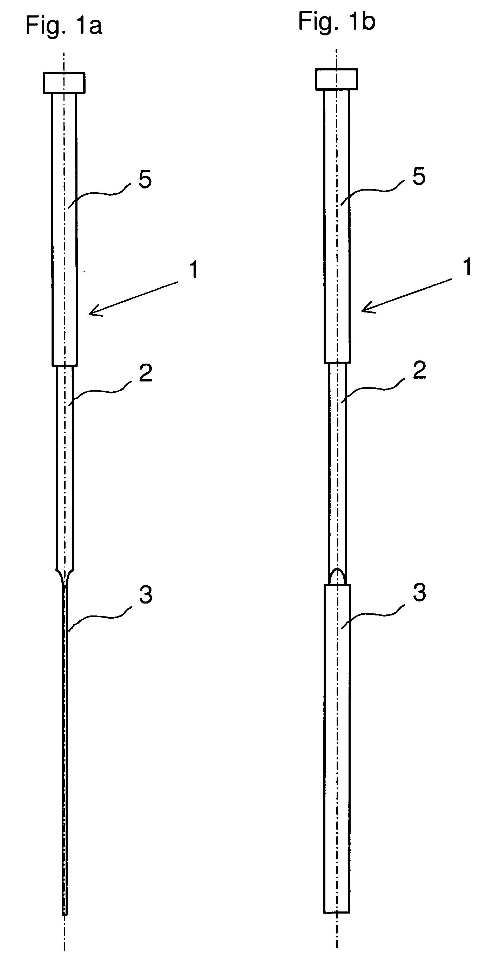

Aus Fig. 1 a ist ein Flachauswerfer zum Auswerfen eines Spritzgussteils aus einer Spritzgussform gemäß einem bevorzugten Ausführungsbeispiel der Erfindung in einer Seitenansicht ersichtlich. Der Flachauswerfer weist einen Auswerferstift 1 mit einem Schaft 2 und einem daran anschließenden Auswerferblatt 3 auf. Auf der dem Auswerferblatt 3 abgewandten Seite weist der Auswerferstift 1 ferner einen Betätigungsabschnitt 5 auf, an dem angegriffen werden kann, um den Auswerferstift 1 zu bewegen. Während der Betätigungsabschnitt 5 und der Schaft 2 des Auswerferstifts 1 jeweils eine zylindrische Form aufweisen, im Querschnitt also kreisförmig sind, weist das Auswerferblatt 3 einen rechteckigen Querschnitt auf.

Wie nun insbesondere Fig. 1 b entnehmbar, die eine Draufsicht auf den Auswerferstift gemäß dem vorliegenden beschriebenen bevorzugten Ausführungsbeispiel zeigt, ist der Durchmesser des Schafts 2 des Auswerferstifts 1 kleiner als die Breite des Auswerferblatts 3. Dies stellt einen wesentlichen Aspekt der Erfindung dar, ist es doch auf diese Weise möglich, den Flachauswerfer sehr genau und stabil in einer weiter unten beschriebenen Führungseinrichtung 4 zu führen. Wie im Folgenden noch beschrieben wird, kann nämlich ein derartiger Flachauswerfer in der Spritzgussform, in der er verwendet wird, mit einer derartigen Führungseinrichtung 4 zusammen wirken, die das Auswerferblatt 3 selbst führt.

Bei dem vorliegenden beschriebenen Flachauswerfer gemäß einem bevorzugten Ausführungsbeispiel der Erfindung weist der Schaft 2 des Auswerferstifts 1 einen Durchmesser von 4,2 mm auf, und die Breite des Auswerferblattes beträgt 5,5 mm. Damit beträgt das Verhältnis des Durchmessers des Schafts 2 des Auswerferstiftes 1 zur Breite des Auswerferblattes 3 0,76.

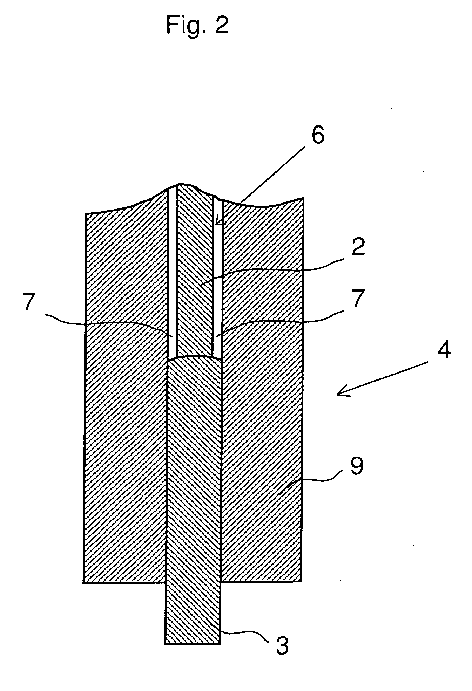

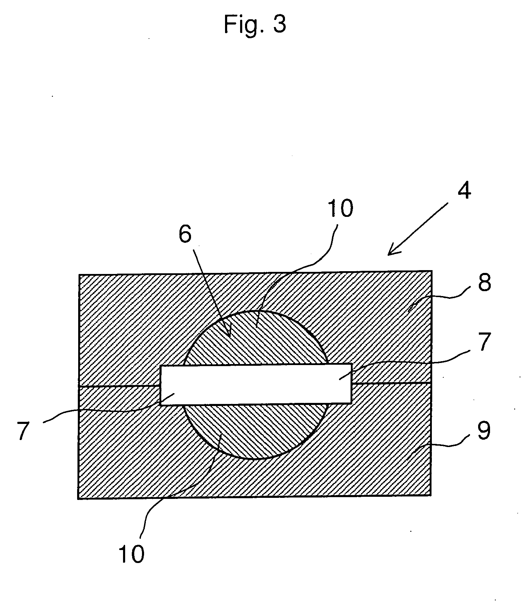

Aus den Figuren 2 und 3 ist nun jeweils ein Teil einer Spritzgussform zur Herstellung eines Spritzgussteils ersichtlich, nämlich jeweils eine Führungseinheit 4, in der der Auswerferstift 1 geführt wird. Die Führungseinheit 4 weist zwei symmetrisch zueinander ausgebildete Teile auf, nämlich ein Oberteil 8 und ein Unterteil 9. Beide Teile 8, 9 weisen jeweils eine halbrunde Vertiefung 10 auf, so dass sich im zusammengesetzten Zustand von Oberteil 8 und Unterteil 9 eine kreisrunde Bohrung 6 ergibt, die als Freibohrung des Schaftes 2 dient.

Aus Fig. 2, die eine Draufsicht auf das Unterteil der Führungseinrichtung 4 mit eingesetztem Auswerferstift 1 zeigt, ist ersichtlich, wie das Auswerferblatt 3 in der Führungseinheit 4 geführt ist. Wie insbesondere aus Fig. 3 ersichtlich, die eine Rückansicht der Führungseinrichtung 4 ohne darin eingesetzten Auswerferstift 1 zeigt, weist die Bohrung 10 mittig zwei einander gegenüberliegende Nuten 7 auf. Die Nuten 7 verlaufen längs der Bohrung 10. Die Bohrung 10 erstreckt sich dabei nicht über die gesamte Länge der Führungseinrichtung 4, während die durch die Nuten 7 gebildete Öffnung sich bis zur Vorderseite der Führungseinrichtung 4 erstreckt. Auf diese Weise kann das Auswerferblatt 3 nach vorne aus der Führungseinrichtung 4 herausgeführt werden, wobei eine vordere Begrenzung dieser Bewegung heraus aus der Führungseinrichtung 4 durch das vordere Ende der Bohrung 10 gegeben ist.

Insgesamt wird damit eine Konstruktion erzielt, bei der eine direkte Führung des Auswerferblatts 3 in den Nuten 7 erfolgt. Auf diese Weise wird eine stabilere Konstruktion erzielt, die insbesondere einem Abknicken des Auswerferblattes 3 entgegenwirkt. Das Auswerferblatt wird auf seiner ganzen Länge geführt, wobei die Länge des Auswerferblattes 3 so gewählt wird, dass das hintere Ende des Auswerferblattes die der Führung 4 nicht verlässt.

### Bezugszeichenliste

- 1: Auswerferstift
- 2: Schaft des Auswerferstifts
- 3: Auswerferblatt
- 4: Führungseinrichtung
- 5: Betätigungsabschnitt
- 6: Bohrung
- 7: Nut
- 8: Oberteil
- 9: Unterteil
- 10: halbrunde Vertiefung

## Patentansprüche

1. Flachauswerfer zum Auswerfen eines Spritzgussteils aus einer Spritzgussform, wobei der Flachauswerfer einen Auswerferstift (1) mit einem Schaft (2) und ein daran anschließendes Auswerferblatt (3) aufweist, **dadurch gekennzeichnet, dass** der Durchmesser des Schafts (2) des Auswerferstifts (1) kleiner ist als die Breite des Auswerferblatts (3).

2. Flachauswerfer nach Anspruch 1, **dadurch gekennzeichnet, dass** der Schaft (2) eine zylindrische Form aufweist.

3. Flachauswerfer nach Anspruch 1 oder 2, **dadurch gekennzeichnet, dass** das Auswerferblatt (3) einen rechteckigen Querschnitt aufweist.

4. Flachauswerfer nach einem der Ansprüche 1 bis, 3, **dadurch gekennzeichnet, dass** der Durchmesser des Schafts (2) des Auswerferstifts (1) im Bereich von 4,2 mm bis 8 mm liegt, insbesondere im Bereich von 4,2 mm bis 6 mm liegt.

5. Flachauswerfer nach einem der Ansprüche 1 bis 4, **dadurch gekennzeichnet, dass** die Breite des Auswerferblatts (3) im Bereich von 5,5 mm bis 11,5 mm liegt, insbesondere im Bereich von 5,5 mm bis 7,5 mm liegt.

6. Flachauswerfer nach einem der Ansprüche 1 bis 5, **dadurch gekennzeichnet, dass** das Verhältnis des Durchmessers des Schafts (2) des Auswerferstifts (1) zur Breite des Auswerferblatts (3) im Bereich von 0,6 bis 0,9 liegt, insbesondere im Bereich von 0,7 bis 0,8 mm liegt.

7. Spritzgussform zur Herstellung eines Spritzgussteils, mit einem Flachauswerfer nach einem der Ansprüche 1 bis 6, **dadurch gekennzeichnet, dass** eine Führungseinrichtung (4) vorgesehen ist, in der der Flachauswerfer längsbeweglich geführt ist, wobei die Führungseinrichtung (4) eine dem Durchmesser des Schafts (2) entsprechende Bohrung (6) aufweist und in der Bohrung (6) eine zur Führung des Auswerferblatts (3) dienende und in Längsrichtung der Bohrung (6) verlaufende Nut (7) vorgesehen ist.

8. Spritzgussform nach Anspruch 7, **dadurch gekennzeichnet, dass** zur Führung des Auswerferblatts (3) in der Bohrung (6) zwei einander gegenüberliegende Nuten (7) vorgesehen sind.

9. Spritzgussform nach Anspruch 7 oder 8, **dadurch gekennzeichnet, dass** die Führungseinrichtung (4) ein Oberteil (8) und ein Unterteil (9) aufweist, wobei das Oberteil (8) und das Unterteil (9) jeweils eine halbrunde Vertiefung (10) aufweisen, und die beiden Vertiefungen (10) im zusammengesetzten Zustand von Oberteil (8) und Unterteil (9) gemeinsam die Bohrung (6) bilden.

10. Verwendung einer Spritzgussform nach einem der Ansprüche 7 bis 9 zur Herstellung eines Gehäuses für ein mobiles Telefon.
